# EUROPÄISCHE PATENTSCHRIFT

(11) **EP 3 748 843 B1**
(45) Veröffentlichungstag und Bekanntmachung des Hinweises auf die Patenterteilung: **05.10.2022**
(21) Anmeldenummer: 19178090.7
(22) Anmeldetag: 04.06.2019
(51) Int. Cl.: H02S 50/10

(54) **VERFAHREN UND VORRICHTUNG ZUR PRÜFUNG VON SOLARZELLEN UND SOLARMODULEN AUF MATERIALDEGRADATION**
METHOD AND DEVICE TO TEST SOLAR CELLS AND SOLAR MODULES FOR MATERIAL DEGRADATION
PROCÉDÉ ET DISPOSITIF POUR TESTER LA DEGRADATION DES MATERIAUX DANS DES CELLULES ET DES MODULES SOLAIRES

(43) Veröffentlichungstag der Anmeldung: 09.12.2020
(73) Patentinhaber: Fraunhofer-Gesellschaft zur Förderung der angewandten Forschung e.V., 80686 München (DE)
(72) Erfinder: Turek, Marko, 06120 Halle (DE); Hagendorf, Christian, 06120 Halle (DE); Sporleder, Kai, 06120 Halle (DE)
(74) Vertreter: Gagel, Roland

(56) Entgegenhaltungen:
- US-A1- 2012 038 385
- US-A1- 2015 127 276

## Beschreibung

### Technisches Anwendungsgebiet

Die vorliegende Erfindung betrifft ein Verfahren sowie eine Vorrichtung zur Prüfung von Solarzellen und Solarmodulen auf elektrische Materialdegradation.

Bei der Herstellung von Solarzellen und Solarmodulen werden fortlaufend neue Materialien bzw. Materialkombinationen in Verbindung mit modifizierten Solarzellprozessen verwendet. Dadurch können die Solarzellen und Solarmodule im Ergebnis eine unterschiedliche Sensitivität hinsichtlich der Alterung (Degradation) im Feldbetrieb aufweisen. Materialdegradation äußert sich in einer abnehmenden Leistung der Solarzellen und Solarmodule über die Lebensdauer. Hierbei treten vor allem licht-induzierte Degradation, also eine Verschlechterung der Halbleiter-Materialeigenschaften durch Lichteinfall, und potentialinduzierte Degradation, verursacht durch eine hohe Spannung am Modulrahmen von Solarmodulen im Vergleich zur Zellspannung, auf. Allerdings verursacht nicht nur die Degradation der Halbleitermaterialien einen Leistungsverlust der Solarzellen und Solarmodule sondern auch Verschmutzungen oder andere optische Alterungen, beispielsweise der Verkapselungsmaterialien. Eine Auswertung der Leistungs- oder Ertragsdaten der Solarzellen oder Solarmodule, die durch Überwachung des Wechselrichters einer Photovoltaik-Anlage erhalten werden können, lassen keine Rückschlüsse auf die Ursache eines Leistungsverlustes oder die Art einer Degradation zu. Damit lassen sich zwar Leistungsminderungen feststellen, aber keine zielgerichteten Gegenmaßnahmen ableiten.

### Stand der Technik

Zur Unterscheidung der Verlusttypen bei Solarzellen oder Solarmodulen müssen bisher umfangreiche diagnostische Verfahren angewendet werden. Die Prüfung von Solarmodulen kann dabei durch externe Messgeräte wie beispielsweise Kameras direkt im Feld erfolgen, wobei die installierten Solarmodule im Stringverbund verbleiben. Weiterhin ist es bekannt, Solarmodule durch mobile Messgeräte in einem Prüfwagen vor Ort oder in einem entfernten Prüflabor zu prüfen. Die Module müssen hierzu allerdings aus dem String entfernt und im Falle des Prüflabors auch erst ins Labor transportiert werden. Als Messmethoden zur Prüfung der Solarmodule kommen derzeit vorrangig Elektrolumineszenzbildgebung, Infrarotbildgebung, I-V-Messungen unter Standardmessbedingungen mit Sonnensimulatoren sowie optische bzw. mikrooptische Inspektion zum Einsatz. Im Fall der bildgebenden Methoden vor Ort können Defekte zwar lokalisiert aber kaum quantifiziert werden, da geeignete Normbedingungen im Feld nicht herstellbar sind. Im Fall der I-V-messungen ist eine genormte Lichtquelle erforderlich, deren Einsatz im Feld allerdings mit großem Aufwand verbunden ist.

Aus der WO 2013/170422 A1 ist ein Verfahren zur Prüfung von Solarzellen und Solarmodulen bekannt, mit dem die Strom-Spannungs-Charakteristik der Solarzellen bzw. Solarmodule mit hoher Genauigkeit gemessen werden kann. Hierbei werden die Solarzellen bzw. Solarmodule mit kurzen Lichtpulsen beleuchtet, während jedes Lichtpulses die elektrische Spannung an der Solarzelle oder dem Solarmodul stufenweise erhöht und der von der Solarzelle oder dem Solarmodul gelieferte Strom jeweils zu festgelegten Zeiten erfasst, um die Strom-Spannungs-Charakteristik zu erhalten. Die zeitliche Abfolge der stufenweisen Erhöhung der Spannung und der Messung des Stroms wird dabei geeignet gewählt, um kapazitive Effekte bei der Messung zu vermeiden. Diese Druckschrift gibt jedoch keinen Hinweis darauf, wie durch eine derartige Messung eine Materialdegradation der Solarzellen oder Solarmodule erkannt oder unterschiedliche Arten der Materialdegradation unterschieden werden können.

Die Aufgabe der vorliegenden Erfindung besteht darin, ein Verfahren sowie eine Vorrichtung zur Prüfung von Solarzellen und Solarmodulen auf Materialdegradation anzugeben, die eine Prüfung auf elektrische Materialdegradation unabhängig von eventuellen optisch verursachten Verlusten ermöglichen.

### Darstellung der Erfindung

Die Aufgabe wird mit dem Verfahren und dem System zum Bedienen einer Vorrichtung gemäß den Patentansprüchen 1 und 5 gelöst.

Vorteilhafte Ausgestaltungen des Verfahrens sowie der Vorrichtung sind Gegenstand der abhängigen Patentansprüche oder lassen sich der nachfolgenden Beschreibung sowie den Ausführungsbeispielen entnehmen.

Bei dem vorgeschlagenen Verfahren wird ein von der oder den Solarzelle(n) oder dem Solarmodul erzeugter Strom während einer stufenweisen Veränderung der elektrischen Spannung an der oder den Solarzelle(n) oder dem Solarmodul zeitaufgelöst gemessen, um auf Basis eines elektrischen Modells der Solarzelle(n) oder des Solarmoduls eine elektrische Kapazität der Solarzelle(n) oder des Solarmoduls in Abhängigkeit von der Spannung zu bestimmen. Erfindungsgemäss werden hierzu an den zu prüfenden Solarzellen oder Solarmodulen wenigstens zwei Messungen durchgeführt. Bei der ersten Messung wird eine elektrische Spannung an die elektrischen Anschlüsse der Solarzelle(n) oder des Solarmoduls angelegt und in einer ersten Richtung stufenweise verändert, d.h. stufenweise erhöht oder stufenweise erniedrigt. Während der Änderung der elektrischen Spannung wird der von der oder den Solarzelle(n) oder dem Solarmodul erzeugte Strom zeitaufgelöst gemessen. Diese zeitaufgelöste Messung umfasst im einfachsten Fall eine Messung unmittelbar vor und eine Messung unmittelbar nach Einstellung der jeweiligen neuen Spannung. Bei der zweiten Messung wird wiederum eine elektrische Spannung an die elektrischen Anschlüsse der Solarzelle(n) oder des Solarmoduls angelegt und entweder in einer zur ersten Richtung entgegengesetzten Richtung stufenweise verändert, d.h. erniedrigt oder erhöht, oder zur Einstellung eines Gleichgewichtszustandes in der oder den Solarzelle(n) oder dem Solarmodul bei unterschiedlichen Spannungswerten konstant gehalten, während wiederum der von der oder den Solarzelle(n) oder dem Solarmodul erzeugte Strom während der jeweiligen Änderung der elektrischen Spannung oder bei jeweils konstanter Spannung im Gleichgewichtszustand gemessen wird. Die stufenweisen Spannungswechsel bei der zweiten Messung können mit der gleichen oder auch mit einer anderen Geschwindigkeit durchgeführt werden wie bei der ersten Messung. Aus den beiden Messungen wird dann auf Basis eines elektrischen Modells der Solarzelle(n) bzw. des Solarmoduls die elektrische Kapazität der Solarzelle(n) oder des Solarmoduls in Abhängigkeit von der an die Solarzelle(n) oder das Solarmodul angelegten elektrischen Spannung berechnet. Der stufenweise Spannungswechsel zwischen den unterschiedlichen Spannungen erfolgt bei jedem Schaltvorgang möglichst schnell, vorzugsweise in einem Zeitraum zwischen 200 ms und 0,01 ms. Die stufenweise Veränderung kann dabei auch nur einen einzigen Spannungswechsel, also eine Stufe, umfassen. Aus der spannungsabhängigen Kapazität wird schließlich durch Vergleich mit Referenzwerten oder mit einer früheren Messung und Kapazitätsbestimmung an der- oder denselben Solarzelle(n) oder demselben Solarmodul ein Grad oder eine relative Veränderung einer elektrischen Degradation der Solarzelle(n) oder des Solarmoduls bestimmt.

Unter der elektrischen Materialdegradation ist hierbei eine Materialdegradation zu verstehen, die sich auf die elektrischen Eigenschaften der Solarzelle oder des Solarmoduls auswirkt, also insbesondere eine Materialdegradation der Halbleitermaterialien. Im Gegensatz dazu wirkt sich eine optische Materialdegradation nur auf die optischen Eigenschaften der Solarzelle oder des Solarmoduls auf, also auf die optische Absorption, Reflexion oder Streuung, und betrifft daher insbesondere die Einkapselungsmaterialien der Solarzelle oder des Solarmoduls.

Das vorgeschlagene Verfahren kann an einer einzelnen Solarzelle, an einer Anordnung aus mehreren miteinander verschalteten Solarzellen oder Solarmodulen oder an einem einzelnen Solarmodul durchgeführt werden. Im Folgenden werden das Verfahren und die Vorrichtung zunächst stellvertretend anhand der Prüfung eines Solarmoduls erläutert. Die Ausführungen gelten jedoch in gleicher Weise auch für eine Solarzelle oder eine Anordnung aus mehreren miteinander verschalteten Solarzellen oder Solarmodulen.

Die für die Durchführung des vorgeschlagenen Verfahrens bereitgestellte Vorrichtung weist entsprechend eine elektrische Strom- oder Spannungsversorgung auf, mit der eine stufenweise Erhöhung und/oder Erniedrigung der elektrischen Spannung an dem zu prüfenden Solarmodul ermöglicht wird, sowie eine Messeinrichtung, mit der ein von dem Solarmodul während der Spannungsänderungen gelieferter Strom zeitaufgelöst messbar ist. Die Vorrichtung weist weiterhin eine Steuer- und Auswerteeinrichtung auf, die die stufenweise Erhöhung der Spannung und die Messung des Stroms steuert, aus den durchgeführten Messungen die spannungsabhängige Kapazität des Solarmoduls berechnet und einen Vergleich mit abgespeicherten Referenzwerten oder einer abgespeicherten früheren Messung durchführt.

Das vorgeschlagene Verfahren und die zugehörige Vorrichtung nutzen somit eine Veränderung der spannungsabhängigen elektrischen Kapazität des Solarmoduls zur Erkennung und ggf. Quantifizierung elektrischer Materialdegradation. Die Kapazität eines Solarmoduls wird maßgeblich durch die Halbleitereigenschaften der Solarzellen bestimmt. In den Solarzellen spielt die Ladungsträgerlebensdauer im Halbleiter eine dominierende Rolle für die Größe der Kapazität. Diese Kapazität hängt von der angelegten Spannung ab, wodurch sie von anderen spannungsunabhängigen Kapazitäten im Solarmodul, z.B. durch Zuleitungen, unterschieden werden kann. Damit kann durch eine Messung der veränderten kapazitiven Eigenschaften in der Solarzelle auf spezielle Degradationszustände im Halbleitermaterial gefolgert werden. Durch die vorgeschlagene Prüfung auf Materialdegradation auf Basis einer Veränderung der elektrischen Kapazität des Solarmoduls wird lediglich die elektrische Halbleiterdegradation erfasst. Optisch verursachte Verluste, beispielsweise durch oberflächliche Verschmutzung oder optische Materialdegradation wie Verfärbung der in den Solarzellen des Solarmoduls eingesetzten Folien, spielen hierbei keine Rolle. Bei gleichzeitiger Messung der elektrischen Leistung des Solarmoduls - und entsprechendem Vergleich mit Referenzwerten oder einer früheren Messung - kann daher auch eine Unterscheidung zwischen elektrischer Materialdegradation und diesen optisch versursachten Verlusten getroffen werden. Wird beispielsweise keine elektrische Materialdegradation aber ein Leistungsverlust festgestellt, so ist dieser Leistungsverlust nicht auf im Halbleiter verursachte Verluste zurückzuführen. Im Ergebnis können daher Solarmodule, die im Feldbetrieb eine verminderte Leistung zeigen, hinsichtlich der Schadensursache klassifiziert und es können geeignete Gegenmaßnahmen abgeleitet werden.

Das Verfahren und die Vorrichtung erfordern keine Entfernung der Solarmodule aus dem String. Die Prüfung kann vielmehr direkt an den montierten Solarmodulen vor Ort vorgenommen werden. Prinzipiell ist selbstverständlich auch eine Entnahme der Solarmodule und eine Prüfung an einem anderen Ort, beispielsweise in einem Prüflabor, mit dem Verfahren und der Vorrichtung möglich.

Das Verfahren und die Vorrichtung ermöglichen eine schnelle Unterscheidung von Leistungseinbußen von Solarmodulen hinsichtlich Halbleitermaterialdegradation einerseits und optischen Verlusten oder elektrischen Verlusten in den peripheren Komponenten, wie z.B. Steckern oder Zuleitungen, andererseits. Der messtechnische Zusatzaufwand ist gering, wobei die vorgeschlagene Vorrichtung auch direkt in den Wechselrichter eines Solarmoduls integriert werden kann. Messungen im laufenden Betrieb sind ohne Ausbau und/oder Transport der Module in ein Testlabor möglich. Das Verfahren und die zugehörige Vorrichtung lassen sich auch zur Qualitätskontrolle im Produktionsumfeld einsetzen.

In einer vorteilhaften Ausgestaltung des Verfahrens sowie der zugehörigen Vorrichtung wird bei den Messungen zusätzlich eine Referenzsolarzelle genutzt, die gleichzeitig mit dem zu prüfenden Solarmodul unter den gleichen Beleuchtungsbedingungen vermessen wird. Dadurch können Stromschwankungen kompensiert werden, die durch eine Änderung der Lichtintensität und nicht durch die kapazitiven Effekte verursacht wurden. Eine derartige Referenzsolarzelle kann beispielsweise auch direkt in die vorgeschlagene Vorrichtung integriert werden.

In einer weiteren vorteilhaften Ausgestaltung wird das zu vermessende Solarmodul während der Messungen mit einer künstlichen Lichtquelle beleuchtet. In diesem Fall kann auf eine Referenzsolarzelle verzichtet werden, sofern durch die eingesetzte künstliche Lichtquelle sichergestellt wird, dass die Lichtintensität und Lichtverteilung während der Messungen konstant bleiben. Eine derartige künstliche Lichtquelle kann beispielsweise ebenfalls als Teil der vorgeschlagenen Vorrichtung ausgebildet sein. Bei dieser Ausgestaltung kann eine Prüfung unter normierten Bedingungen auch im Freifeld erfolgen. Weiterhin kann die Kapazitätsbestimmung dann vorteilhaft mit einer Leistungsmessung kombiniert werden.

Die vorgeschlagene Vorrichtung kann als eigenständiges Gerät betrieben werden, in einen Wechselrichter eines Solarmoduls oder einer Solarmodulanlage integriert sein, wobei dann mehrere Module gleichzeitig geprüft werden, oder auch in einen bestehenden Sonnensimulator integriert werden. Die spannungsabhängige Kapazität des Solarmoduls wird bei dem vorgeschlagenen Verfahren aus den zeitaufgelösten Strommessungen auf Basis eines elektrischen Modells des Solarmoduls berechnet. Ein beispielhaftes Modell lässt sich als Ersatzschaltbild des Solarmoduls darstellen, das wenigstens eine Stromquelle für den Generationsstrom unter Lichteinfall, den Parallel- oder Shuntwiderstand, den Serienwiderstand und die spannungsabhängige Kapazität des Solarmoduls umfasst. Gegebenenfalls enthält dieses Modell bzw. Ersatzschaltbild noch weitere elektrische Komponenten wie z.B. ein spannungsabhängiges Bauteil oder eine Diode.

Das vorgeschlagene Verfahren und die zugehörige Vorrichtung lassen sich besonders vorteilhaft zur Kontrolle von Solarmodulen im Feldbetrieb einsetzen, insbesondere zur Identifizierung einer Leistungsminderung aufgrund einer HalbleitermaterialDegradation. Mit dem Verfahren und der zugehörigen Vorrichtung kann eine Unterscheidung der Halbleitermaterial-Degradation von anderen Verlustursachen, wie einer Verschmutzung oder Alterung der optischen Komponenten, erfolgen. Weiterhin lassen sich das Verfahren und die Vorrichtung auch in der Inline-Qualitätskontrolle bei der Produktion von Solarzellen oder Solarmodulen einsetzen.

### Kurze Beschreibung der Zeichnungen

Das vorgeschlagene Verfahren und die zugehörige Vorrichtung werden nachfolgend anhand von Ausführungsbeispielen in Verbindung mit den Zeichnungen nochmals näher erläutert. Hierbei zeigen:
- Fig. 1: ein erstes Beispiel für ein zur Berechnung der spannungsabhängigen Kapazität beim vorgeschlagenen Verfahren eingesetztes elektrisches Modell;
- Fig. 2: ein zweites Beispiel für ein zur Berechnung der spannungsabhängigen Kapazität beim vorgeschlagenen Verfahren eingesetztes elektrisches Modell;
- Fig. 3: ein Beispiel für eine Strom-Spannungs-Kennlinienmessung (simuliert) an einer Solarzelle in Vorwärts- und Rückwärtsrichtung;
- Fig. 4: ein Beispiel für Strom-Spannungs-Kennlinien bei unterschiedlicher Materialdegradation der Solarzelle; und
- Fig. 5: eine beispielhafte logarithmische Darstellung der spannungsabhängigen Kapazität einer Solarzelle bei unterschiedlicher Materialdegradation.

### Wege zur Ausführung der Erfindung

Für die Prüfung von Solarzellen oder Solarmodulen auf elektrische bzw. Halbleiter-Materialdegradation wird beim vorgeschlagenen Verfahren und der zugehörigen Vorrichtung die spannungsabhängige elektrische Kapazität der Solarzelle oder des Solarmoduls bestimmt. Die hierzu eingesetzte Vorrichtung weist eine Stromversorgung auf, die einen schnellen Spannungswechsel innerhalb einer Zeitspanne von ≤ 200 ms zwischen mindestens zwei Spannungswerten ermöglicht, sowie einer Stromsenke bzw. Messeinrichtung, die den generierten Strom des Solarmoduls dabei zeitlich synchronisiert, d.h. zeitaufgelöst mit hoher Geschwindigkeit misst. Aus diesen Messdaten und einem hinterlegten elektrischen Modell des Solarmoduls kann dann die Kapazität bestimmt werden. Dazu beinhaltet die Vorrichtung eine Datenauswerteeinheit, die die zeitabhängigen Strom-Spannungs-Kennwerte der Messungen in die spannungsabhängigen Kapazitätswerte umrechnet und mit Referenzwerten - oder auch mit Werten aus früheren Messungen - vergleicht. Diese Messung bzw. Bestimmung der Kapazität kann wiederholt in zeitlichen Abständen über die Lebensdauer eines Solarmoduls im Freifeld erfolgen. In einer einfachen Ausführung können durch diese Messungen auch nur relative Veränderungen der spannungsabhängigen Kapazitäten und damit der elektrischen Materialdegradation über die Lebensdauer des Solarmoduls bestimmt werden.

Bei dem zur Prüfung eingesetzten Messverfahren werden im vorliegenden Beispiel folgende Schritte durchgeführt:
1) Herstellung eines elektrischen Kontaktes des Solarmoduls mit der Messvorrichtung, beispielsweise durch Initialisierung der Messfunktion bei Integration der Vorrichtung in einen Wechselrichter
2) Erste Messung: Vermessung des Solarmoduls bei aufsteigenden Spannungen, wobei sich die Werte der Spannungen an den Betriebsspannungen bzw. den Leerlaufspannungen des Solarmoduls orientieren sollten, hierzu:
   a) Einstellung einer Spannung am Solarmodul und schnelles Umschalten auf eine neue Spannung
   b) Messung der Stromabgabe des Solarmoduls unmittelbar vor und nach Einstellung der neuen Spannung
   c) Wiederholung der Schritte 2)a) und 2)b)
3) Zweite Messung: Vermessung des Solarmoduls bei abfallenden Spannungen analog zu Punkt 2)
4) Rechnerischer Vergleich der Ströme der ersten Messung und der zweiten Messung basierend auf einem elektrischen Modell des Solarmoduls und Bestimmung der spannungsabhängigen Kapazität auf Basis der Messungen und dieses Modells.

Die Reihenfolge der ersten und der zweiten Messung spielt dabei keine Rolle, da sie bei der Datenauswertung berücksichtigt werden kann. Alternativ zur zweiten Messung kann auch nur eine Strommessung im Gleichgewichtszustand (Steady-State-Messung) als Vergleich durchgeführt werden. Dazu ist ein langsamer Wechsel zwischen den zwei Spannungen bzw. eine Pause nach dem Einstellen der Spannung notwendig.

Sofern das Solarmodul gegenüber dem Ursprungszustand unmittelbar nach Auslieferung eine Leistungsverringerung zeigt und sich die gemessene bzw. bestimmte Kapazität von der Referenz-Kapazität unterscheidet, die beispielsweise direkt nach der Produktion des Solarmoduls oder eines bau- und herstellungsgleichen Solarmoduls gemessen bzw. bestimmt wurde, ist von einer elektrischen Materialdegradation der Halbleitermaterialien der Solarzellen auszugehen. Andernfalls wird die Leistungsverringerung durch optische Verluste oder elektrische Verluste in weiteren Komponenten wie Steckern oder Verbindungsleitungen verursacht.

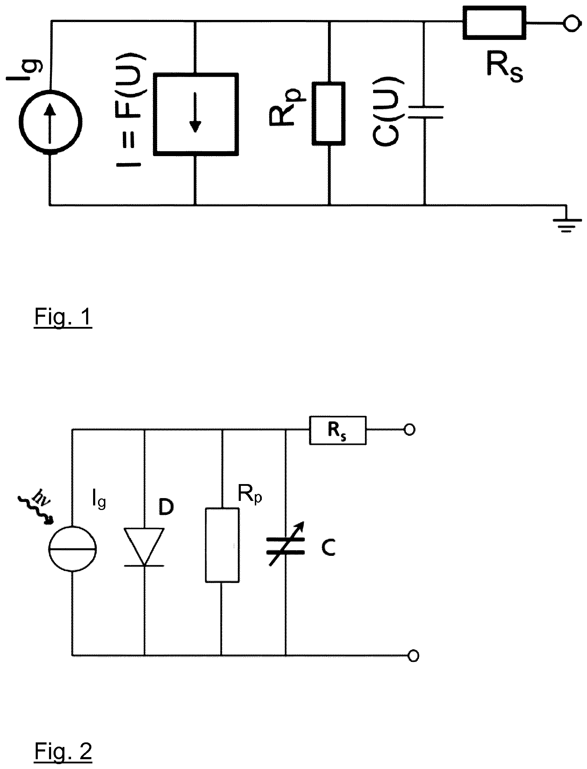

Als elektrisches Modell für das Solarmodul kann beispielsweise ein Modell eingesetzt werden, wie es im Ersatzschaltbild in Fig. 1 dargestellt ist. Das Ersatzschaltbild weist in diesem Beispiel als elektrische Komponenten eine Stromquelle für den Generationsstrom I_{g}, ein spannungsabhängiges Bauteil (I=F(U)), einen Parallel- oder Shuntwiderstand R_{P}, einen Serienwiderstand R_{S} sowie die spannungsabhängige Kapazität C(U) auf.

Fig. 2 zeigt ein weiteres Beispiel für ein entsprechendes elektrisches Modell, in diesem Fall ein Eindiodenmodell, in dem anstelle des spannungsabhängigen Bauteils der Figur 1 eine Diode D verwendet wird. Mit beiden Modellen lässt sich jeweils die spannungsabhängige Kapazität aus den Strom-Spannungsmessungen berechnen. Auch andere, insbesondere detailliertere, elektrische Modelle einer Solarzelle oder eines Solarmoduls können für die Berechnung genutzt werden.

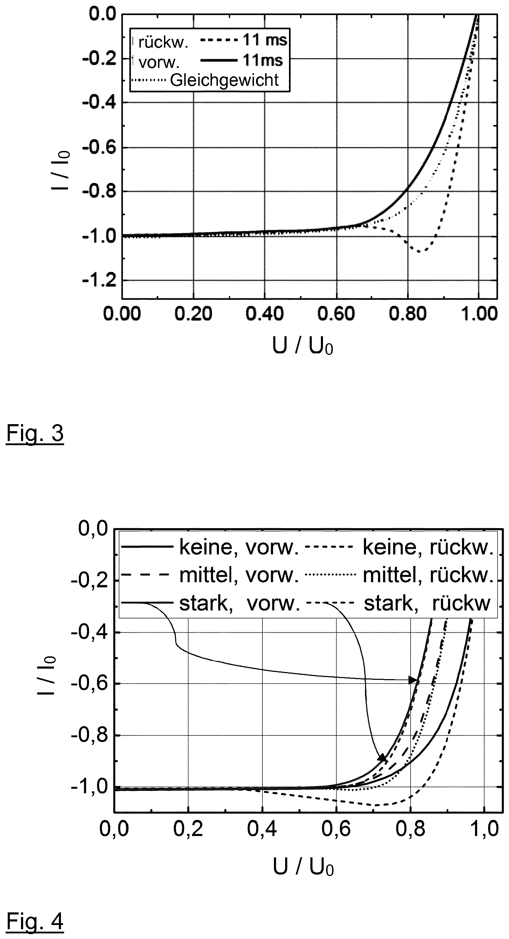

Fig. 3 zeigt eine simulierte I-U-Kennlinie eines Solarmoduls bei beim schnellen Umschalten zwischen zwei Spannungen innerhalb von 11 ms. In der Figur ist der Stromverlauf (I gemessener Strom; I₀ Kurzschlussstrom) in Abhängigkeit von der angelegten Spannung (U angelegte Spannung; U₀ Leerlaufspannung) jeweils bei einer Spannungserhöhung (vorwärts) und bei einer Spannungserniedrigung (rückwärts) dargestellt. Aus dieser Darstellung ist der Hysterese-Effekt aufgrund der Kapazität des Solarmoduls deutlich zu erkennen. Dieser Hysterese-Effekt führt bei den kurzen Schalt- bzw. Messzeiten zu einer Aufspaltung der Kennlinien in Abhängigkeit von der Schaltrichtung. Basierend auf dem Ersatzschaltbild der Fig. 1 oder der Fig. 2 kann eine Gleichgewichtskennlinie berechnet werden, wie sie in der Fig. 3 ebenfalls dargestellt ist. Dies entspricht einer Kennlinie, welche bei ideal langer Messzeit gemessen wurde.

Für die Bestimmung der spannungsabhängigen Kapazität wird eine zeitabhängige Spannungsrampe mit einer Vielzahl von Spannungsstufen auf die Solarzelle oder das Solarmodul gegeben und jeweils die Ströme gemessen. Dabei kann die Spannung entweder (bei kleinen Spannungen startend) ansteigen oder (bei großen Spannungen startend) abfallen. Typische Spannungsbereiche liegen für einzelnen Solarzellen zwischen -0,5 V und +0,8 V. Typische Ströme liegen bei bis zu 10 A. Ausgangspunkt sind jeweils die gemessenen Ströme der beiden Richtungen als Funktion der Spannung sowie der zeitliche Verlauf der Spannungsrampe. Aus der Differenz der Ströme im Verhältnis zur Differenz der zeitlichen Ableitungen der Spannung lässt sich die spannungsabhängige Kapazität bestimmen.

Fig. 4 zeigt Beispiele für den Hysterese-Effekt einer Solarzelle bei verschiedenen Degradationsgraden (keine Degradation - mittlere Degradation - starke Degradation). Die Zelle wurde hierzu absichtlich degradiert und so eine Reduktion der Zellleistung hervorgerufen. Der Unterschied der Messwerte zwischen den I-V-Kennlinien in Vorwärtsrichtung (steigende Spannung) und Rückwärtsrichtung (abnehmende Spannung) nimmt ab, je weiter die Degradation fortgeschritten ist. Die Messung in Vorwärtsrichtung startet bei 0 V Zellspannung und endet bei der Leerlaufspannung U₀. Für die Messung in Rückwärtsrichtung wurde diese Spannungsrampe umgekehrt. Aus den jeweiligen Vor- und Rückwärtsmessungen wurden auf Basis des elektrischen Modells der Solarzelle spannungsabhängige Kapazitäten C(U) für die drei Degradationsgrade erhalten.

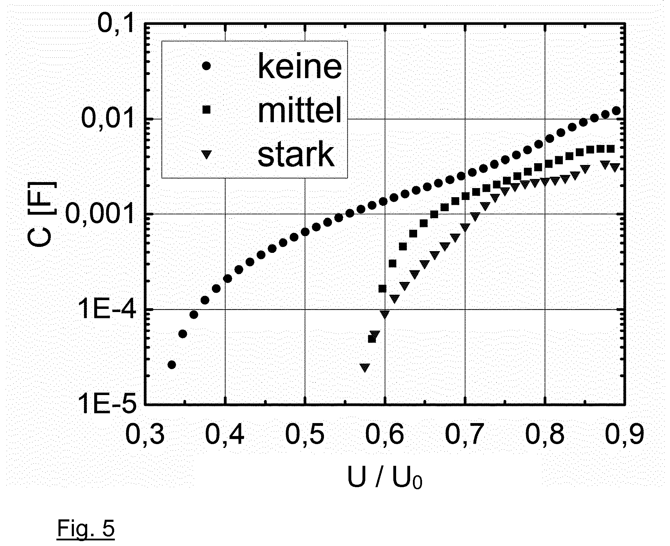

Fig. 5 zeigt hierzu eine einfach logarithmische Darstellung dieser spannungsabhängigen Kapazität bei den unterschiedlichen Degradationsgraden. Die Hysterese nimmt in Folge der Degradation ab. Die durch die Degradation reduzierte Ladungsträgerlebensdauer spiegelt sich dann in der reduzierten Kapazität wider, wie aus der Figur zu erkennen ist.

## Patentansprüche

1. Verfahren zur Prüfung von Solarzellen oder Solarmodulen auf elektrische Materialdegradation, bei dem
- ein von der oder den Solarzelle(n) oder dem Solarmodul erzeugter Strom während einer stufenweisen Veränderung der elektrischen Spannung an der oder den Solarzelle(n) oder dem Solarmodul zeitaufgelöst gemessen wird, um auf Basis eines elektrischen Modells der Solarzelle(n) oder des Solarmoduls eine elektrische Kapazität der Solarzelle(n) oder des Solarmoduls in Abhängigkeit von der Spannung zu bestimmen, und
- aus der spannungsabhängigen elektrischen Kapazität durch Vergleich mit Referenzwerten oder einer früheren Messung an der oder den Solarzelle(n) oder dem Solarmodul ein Grad oder eine relative Veränderung einer elektrischen Materialdegradation der Solarzelle(n) oder des Solarmoduls bestimmt wird, **dadurch gekennzeichnet, dass** zur Bestimmung der spannungsabhängigen elektrischen Kapazität wenigstens zwei Messungen durchgeführt werden, von denen - bei einer ersten Messung eine elektrische Spannung an die Solarzelle(n) oder das Solarmodul angelegt und stufenweise in einer ersten Richtung verändert wird, und ein von der oder den Solarzelle(n) oder dem Solarmodul erzeugter Strom während jeder stufenweisen Veränderung zeitaufgelöst gemessen wird, und - bei einer zweiten Messung eine elektrische Spannung an die Solarzelle(n) oder das Solarmodul angelegt und entweder in einer zur ersten Richtung entgegengesetzten Richtung stufenweise verändert oder zur Einstellung eines Gleichgewichtszustandes in der oder den Solarzelle(n) oder dem Solarmodul bei unterschiedlichen Spannungswerten konstant gehalten wird, und ein von der oder den Solarzelle(n) oder dem Solarmodul erzeugter Strom während jeder stufenweisen Veränderung zeitaufgelöst oder bei jeweils konstanter Spannung im Gleichgewichtszustand gemessen wird.

2. Verfahren nach Anspruch 1,
**dadurch gekennzeichnet,**
**dass** gleichzeitig eine Referenz-Solarzelle in der gleichen Weise vermessen wird, die der gleichen Beleuchtung wie die Solarzelle(n) oder das Solarmodul ausgesetzt ist, um durch die Beleuchtung verursachte Einflüsse auf das Messergebnis herauszurechnen.

3. Verfahren nach Anspruch 1 oder 2,
**dadurch gekennzeichnet,**
**dass** die Solarzelle(n) oder das Solarmodul bei der Prüfung mit Licht einer künstlichen Lichtquelle mit konstanter Lichtintensität und -verteilung beleuchtet wird oder werden.

4. Verfahren nach einem der Ansprüche 1 bis 3,
**dadurch gekennzeichnet,**
**dass** zusätzlich eine Leistungsmessung an der oder den Solarzelle(n) oder dem Solarmodul durchgeführt wird.

5. System zum Bedienen einer Vorrichtung zur Durchführung des Verfahrens nach einem der Ansprüche 1 bis 4,
die wenigstens
- eine elektrische Strom- oder Spannungsversorgung, mit der ein stufenweiser Spannungswechsel zwischen wenigstens zwei elektrischen Spannungen an einer Solarzelle oder einem Solarmodul möglich ist,
- eine Messeinrichtung, mit der ein durch die Solarzelle oder das Solarmodul während eines stufenweisen Spannungswechsels generierter Strom zeitaufgelöst messbar ist, und
- eine Auswerteeinrichtung aufweist, die aus von der Messeinrichtung gelieferten Messdaten zu dem während des stufenweisen Spannungswechsels generierten Strom auf Basis eines hinterlegten elektrischen Modells eine spannungsabhängige elektrische Kapazität der Solarzelle oder des Solarmoduls bestimmt und durch Vergleich mit Referenzwerten oder einer früheren Messung einen Grad oder eine relative Veränderung einer elektrischen Materialdegradation der Solarzelle oder des Solarmoduls bestimmt, **dadurch gekennzeichnet, dass** die Messeinrichtung so konfiguriert ist, das zur Bestimmung der spannungsabhängigen elektrischen Kapazität wenigstens zwei Messungen durchgeführt werden, von denen - bei einer ersten Messung eine elektrische Spannung an die Solarzelle(n) oder das Solarmodul angelegt und stufenweise in einer ersten Richtung verändert wird, und ein von der oder den Solarzelle(n) oder dem Solarmodul erzeugter Strom während jeder stufenweisen Veränderung zeitaufgelöst gemessen wird, und - bei einer zweiten Messung eine elektrische Spannung an die Solarzelle(n) oder das Solarmodul angelegt und entweder in einer zur ersten Richtung entgegengesetzten Richtung stufenweise verändert oder zur Einstellung eines Gleichgewichtszustandes in der oder den Solarzelle(n) oder dem Solarmodul bei unterschiedlichen Spannungswerten konstant gehalten wird, und ein von der oder den Solarzelle(n) oder dem Solarmodul erzeugter Strom während jeder stufenweisen Veränderung zeitaufgelöst oder bei jeweils konstanter Spannung im Gleichgewichtszustand gemessen wird. .

6. System nach Anspruch 5,
**dadurch gekennzeichnet,**
**dass** die Vorrichtung eine Referenz-Solarzelle aufweist, die mit der Vorrichtung in der gleichen Weise und zur gleichen Zeit vermessen werden kann wie die Solarzelle oder das Solarmodul, wobei die Auswerteeinrichtung so ausgebildet ist, dass sie durch zeitlich schwankende Beleuchtung verursachte Einflüsse auf die Bestimmung der spannungsabhängigen elektrischen Kapazität auf Basis der Messung an der Referenz-Solarzelle kompensiert.

7. System nach Anspruch 5,
**dadurch gekennzeichnet,**
**dass** die Vorrichtung eine künstliche Lichtquelle aufweist, mit der die Solarzelle oder das Solarmodul während der Messung beleuchtbar ist.

## Claims

1. Method to test solar cells or solar modules for electrical material degradation, in which
- a current generated by the one or more solar cell(s) or the solar module is measured in time-resolved manner while the electrical voltage at the one or more solar cell(s) or the solar module is changed incrementally in order to determine an electrical capacitance of the solar cell(s) or the solar module as a function of the voltage on the basis of an electrical model of the solar cell(s) or the solar module, and
- a degree or relative change in an electrical material degradation of the solar cell(s) or the solar module is determined from the voltage-dependent electrical capacitance by comparing it with reference values or an earlier measurement at the one or more solar cell(s) or the solar module, **characterized in that** in order to determine the voltage-dependent electrical capacitance at least two measurements are taken, of which
- in a first measurement an electrical voltage is applied to the solar cell(s) or the solar module and changed incrementally in a first direction, and a current generated by the one or more solar cell(s) or the solar module is measured in time-resolved manner during each incremental change, and
- in a second measurement an electrical voltage is applied to the solar cell(s) or the solar module and is either changed incrementally in a direction opposite to the first direction or is kept constant to establish a balance state in the one or more solar cell(s) or the solar module for different voltage values, and a current generated by the one or more solar cell(s) or the solar module is measured in time-resolved manner during each incremental change or for a respective constant voltage in the balanced state.

2. Method according to Claim 1,
**characterized in that**
a reference solar cell that is exposed to the same illumination as the solar cell(s) or the solar module is measured in the same way at the same time in order to subtract therefrom the influences on the measurement result caused by the illumination.

3. Method according to Claim 1 or 2,
**characterized in that**
the solar cell(s) or the solar module is or are illuminated with light from an artificial light source having constant light intensity and distribution during testing.

4. Method according to any one of Claims 1 to 3,
**characterized in that**
additionally a power measurement is carried out at the one or more solar cell(s) or the solar module.

5. System for operating a device for carrying out the method according to any one of Claims 1 to 4, which has at least
- an electrical current or voltage supply, with which an incremental change of the voltage can be made between at least two electrical voltages at a solar cell or solar module,
- a measuring device, with which a current generated by the solar cell or the solar module during an incremental change of the voltage can be measured in time-resolved manner, and
- an evaluation device which determines a voltage-dependent electrical capacitance of the solar cell or the solar module from measurement data delivered by the measurement device about the current generated during the incremental voltage change on the basis of a stored electrical model, and determines a degree or relative change in an electrical material degradation of the solar cell or solar module by comparing it with reference values or an earlier measurement, **characterized in that** the measuring device is configured such that in order to determine the voltage-depending electrical capacitance at least two measurements are carried out, of which
- in a first measurement an electrical voltage is applied to the solar cell(s) or the solar module and changed incrementally in a first direction, and a current generated by the one or more solar cell(s) or the solar module is measured in time-resolved manner during each incremental change, and
- in a second measurement an electrical voltage is applied to the solar cell(s) or the solar module and is either changed incrementally in a direction opposite to the first direction or is kept constant to establish a balance state in the one or more solar cell(s) or the solar module for different voltage values, and a current generated by the one or more solar cell(s) or the solar module is measured in time-resolved manner during each incremental change or for a respective constant voltage in the balanced state.

6. System according to Claim 5,
**characterized in that**
the device includes a reference solar cell which can be measured with the device in the same way and at the same time as the solar cell or the solar module, wherein the evaluation device is designed such that it compensates for influences on the determination of the voltage-dependent electrical capacitance caused by temporally fluctuating illumination based on the measurement at the reference solar cell.

7. System according to Claim 5
**characterized in that**
the device includes an artificial light source, with which the solar cell or solar module can be illuminated during the measurement.

## Revendications

1. Procédé pour tester la dégradation des matériaux dans des cellules solaires ou des modules solaires, dans lequel
- le courant généré à partir de la ou des cellule(s) solaire(s) ou le module solaire est mesuré de manière résolue dans le temps lors d'une variation progressive de la tension électrique sur la ou les cellule(s) solaire(s) ou le module solaire afin de déterminer sur la base d'un modèle électrique de la ou des cellule (s) solaire(s) ou du module solaire une capacité électrique de la ou des cellule (s) solaire (s) ou du module solaire fonction de la tension, et
- à partir de la capacité électrique fonction de la tension par comparaison avec des valeurs de référence ou une mesure précédente au niveau de la ou des cellule(s) solaire(s) ou du module solaire un degré ou une variation relative de la dégradation du matériau électrique au niveau de de la ou des cellule (s) solaire (s) ou du module solaire est déterminé,
**caractérisé en ce qu'**au moins deux mesures sont effectuées pour déterminer la capacité électrique fonction de la tension, desquelles
- lors d'une première mesure une tension électrique est appliquée à la ou aux cellule (s) solaire (s) ou au module solaire et progressivement variée dans une première direction, et un courant généré par la ou les cellule(s) solaire(s) ou le module solaire est mesuré d'une manière résolue dans le temps pendant chaque variation progressive, et
- lors d'une deuxième mesure, une tension électrique est appliquée à la ou aux cellule (s) solaire (s) ou au module solaire et soit modifiée progressivement dans une direction opposée à la première direction, soit pour établir un état d'équilibre dans la ou les cellule(s) solaire(s) ou le module solaire maintenue constante à différentes valeurs de tension, et un courant généré par la ou les cellule(s) solaire(s) ou le module solaire est résolu temporellement lors de chaque variation progressive ou mesuré à une tension constante dans l'état d'équilibre.

2. Procédé selon la revendication 1,
**caractérisé en ce que**
simultanément une cellule solaire de référence est mesurée de la même manière, qui est exposée au même éclairage que la ou les cellule (s) solaire (s) ou le module solaire, afin d'être calculée via des influences provoquées par l'éclairage sur le résultat de la mesure.

3. Procédé selon la revendication 1 ou 2,
**caractérisé en ce que**
la ou les cellule(s) solaire(s) ou le module solaire est ou sont éclairé(s) lors du test avec de la lumière provenant d'une source de lumière artificielle avec une intensité et une distribution lumineuses constantes.

4. Procédé selon une quelconque des revendications 1 à 3,
**caractérisé en ce qu'**
une mesure de puissance est effectuée en outre sur la ou les cellule(s) solaire(s) ou le module solaire.

5. Système pour utiliser un dispositif de mise en œuvre du procédé selon une des revendications 1 à 4, qui présente au moins
- une alimentation en courant ou en tension électrique, avec laquelle une variation progressive de tension entre au moins deux tensions électriques sur une cellule solaire ou un module solaire est possible,
- un dispositif de mesure, avec lequel un courant généré par la cellule solaire ou le module solaire lors d'une variation de tension progressive peut être mesuré de manière résolue dans le temps et
- un dispositif d'évaluation, qui détermine à partir des données de mesure fournies par le dispositif de mesure au courant généré pendant la variation de tension progressive, sur la base d'un modèle électrique de la ou des cellules solaires ou du module solaire une capacité électrique en fonction de la tension et par comparaison avec des valeurs de référence ou une mesure précédente au niveau de la (des) cellule(s) solaire(s) ou du module solaire détermine un degré ou une variation relative de la dégradation du matériau électrique au niveau de de la(des) cellule(s) solaire(s) ou du module solaire,
**caractérisé en ce que** le dispositif de mesure est configuré de telle manière qu'au moins deux mesures sont effectuées pour déterminer la capacité électrique fonction de la tension, desquelles
- lors d'une première mesure, une tension électrique est appliquée à la ou aux cellule (s) solaire (s) ou au module solaire et progressivement variée dans une première direction, et un courant généré par la ou les cellule (s) solaire (s) ou le module solaire est mesuré d'une manière résolue dans le temps pendant chaque variation progressive, et
- lors d'une deuxième mesure, une tension électrique est appliquée à la ou aux cellule (s) solaire (s) ou au module solaire et soit graduellement variée dans une direction opposée à la première direction, soit pour établir un état d'équilibre dans la ou les cellule(s) solaire(s) ou le module solaire est maintenue constante à différentes valeurs de tension, et un courant généré par la ou les cellule(s) solaire(s) ou le module solaire est résolu temporellement lors de chaque variation progressive ou mesuré à une tension constante dans l'état d'équilibre.

6. Système selon la revendication 5,
**caractérisé en ce que**
le dispositif comprend une cellule solaire de référence, qui est connectée au dispositif de la même manière et peut être mesurée en même temps que la cellule solaire ou le module solaire, dans lequel le dispositif d'évaluation est conçu de telle sorte qu'il compense les influences provoquées par un éclairage fluctuant dans le temps sur la détermination de la capacité électrique fonction de la tension sur la base de la mesure au niveau de la cellule solaire de référence.

7. Système selon la revendication 5,
**caractérisé en ce que**
le dispositif comporte une source de lumière artificielle, avec laquelle la cellule solaire ou le module solaire peut être éclairé pendant la mesure.
